# EUROPÄISCHE PATENTSCHRIFT

(11) **EP 2 937 379 B1**
(45) Veröffentlichungstag und Bekanntmachung des Hinweises auf die Patenterteilung: **31.05.2017**
(21) Anmeldenummer: 15001232.6
(22) Anmeldetag: 25.04.2015
(51) Int. Cl.: C08J 9/236, C08J 9/232, C08L 23/12, B32B 5/18

(54) **VERFAHREN ZUR HERSTELLUNG VON EPP-FORMTEILEN**
METHOD FOR THE MANUFACTURE OF EPP MOULDED PARTS
PROCÉDÉ DE PRODUCTION DE PIÈCES MOULÉES EPP

(30) Priorität: 25.04.2014 DE 102014005903
(43) Veröffentlichungstag der Anmeldung: 28.10.2015
(73) Patentinhaber: Niemeyer, Gerd, 6800 Feldkirch (AT); Wörthwein, Hans, 74389 Cleebronn (DE)
(72) Erfinder: Niemeyer, Gerd, 6800 Feldkirch (AT); Wörthwein, Hans, 74389 Cleebronn (DE)
(74) Vertreter: Völger, Karl Wolfgang

(56) Entgegenhaltungen:
- WO-A1-2005/105404

## Beschreibung

Die vorliegende Erfindung bezieht sich auf ein Verfahren zur Herstellung von Formteilen aus EPP-Teilchen sowie auf die EPP-Formteile selbst.

Polypropylen (PP) ist ein teilkristalliner Thermoplast, der zu der Gruppe der Polyolefine gehört. PP wird in der Regel durch Polymerisation des Monomers Propen mit Hilfe von Katalysatoren gewonnen. Da PP geruchlos und hautverträglich, für Anwendungen im Lebensmittelbereich und der Pharmazie geeignet sowie physiologisch unbedenklich ist, wird es in einem breiten Spektrum von Anwendungen genutzt. Hinzu kommt die Möglichkeit, durch Variieren der Molekülstruktur, der mittleren molaren Masse, deren Verteilung oder durch Copolymere die Eigenschaften in weiten Bereichen zu beeinflussen.

Eine spezielle Form des Polypropylen stellt EPP - expandiertes Polypropylen - dar, das in den 1980er Jahren entwickelt wurde. EPP kann als Partikelschaumstoff auf PP-Basis angesehen werden. Herkömmlicherweise werden bei der Herstellung von EPP mit der Autoklavtechnik und der direkten Schaumextrusion zwei prinzipielle Verfahren unterschieden.

Formteile aus EPP herzustellen, ist seit vielen Jahren prinzipiell bekannt. Nach den aus dem Stand der Technik bekannten Verfahren (vgl. z.B. Technische Information der BASF SE zu Neopolen^{®} P, TI G-KT/SE, August 2009) werden solche Formteile aus EPP mittels Wasserdampf bei einer Temperatur von ca. 160 °C in Aluminiumwerkzeugen hergestellt. Die Werkzeuge müssen hierbei stabiler sein als vergleichbare Werkzeuge beispielsweise für die Herstellung von Formteilen aus expandiertem Polystyrol (EPS). Die Herstellung selbst kann als eine Art Sinterprozess beschrieben werden, bei dem die einzelnen EPP-Partikel, nach dem Befüllen einer Form, mittels Wasserdampf erhitzt und erweicht werden, dadurch die in den Partikeln eingeschlossene Luft einen Schaumdruck entwickelt wird, wodurch schließlich die Partikel zu einem Formteil versintert werden.

Für die nach dem Stand der Technik bekannten Verfahren sind folglich durch die Handhabung von Wasserdampf und den damit verbundenen hohen Druck aufwändigere Anlagen zur Formteilherstellung notwendig, die größere Investitionen erfordern. Daher eignen sich die bekannten Verfahren aus wirtschaftlicher Sicht nur für Großserien. Eine Kleinserie von EPP-Formteilen oder gar eine Fertigung von Einzelstücken ist wirtschaftlich nicht sinnvoll realisierbar.

Abseits der hauptsächlichen Anwendungen, beispielsweise im Automobilbau und für hochwertige Mehrwegverpackungen, wird EPP zunehmend für weitere Einsatzgebiete genutzt. Beispiele hierfür sind die Bereiche Sport, Logistik (Lagerung und Transport von mechanisch empfindlichen Bauteilen), Möbel und Design (Prototypenbau) oder Modellbau (Einzelanfertigungen). Daher besteht inzwischen ein gesteigerter Bedarf für kleine Serien von EPP-Formteilen oder Einzelstücke.

Ausgehend von den vorstehend genannten Nachteilen des Standes der Technik und dem bestehenden Bedarf liegt der vorliegenden Erfindung die Aufgabe zugrunde, ein Verfahren anzugeben, mit dem einfach und kostengünstig kleine Serien und Einzelstücke von EPP-Formteilen hergestellt werden können. Ein weiteres Ziel sind einfache und kostengünstige EPP-Formteile selbst.

Diese Aufgabe wird in einem ersten Aspekt der vorliegenden Erfindung durch ein Verfahren zur Herstellung von EPP-Formteilen gelöst, das die Schritte umfasst:
a) Bereitstellen von EPP-Teilchen,
b) Benetzen der EPP-Teilchen mit einer wässrigen Emulsion zumindest eines mit Chlor und Maleinsäureanhydrid modifizierten Polyolefins und dadurch Erhalten von funktionalisierbaren EPP-Teilchen,
e) Formgeben der funktionalisierbaren EPP-Teilchen,
f) Erhitzen der formgegebenen, funktionalisierbaren EPP-Teilchen auf eine Temperatur unterhalb des Schmelzbereichs der EPP-Teilchen und dadurch Funktionalisieren der formgegebenen, funktionalisierbaren EPP-Teilchen, wobei die EPP-Teilchen miteinander verbunden werden, und
g) Abkühlen und dadurch Erhalten des EPP-Formteils.
Ein ähnliches Verfahren wird in der veröffentlichten internationalen Patentanmeldung WO 2005/105404 A1 offenbart, wobei jedoch das Benetzen der EPP-Teilchen mit einer Lösung eines Polymers erfolgt, insbesondere eines Polymers mit einer niedrigeren Erweichungstemperatur. Als Beispiele werden konkret Dextrin, Casein, Acrylharze, Vinylacetatharze, Polyesterharze, Polyurethanharze, Polyvinylalkoholharze und Polyamidharze genannt.

In Schritt a) werden EPP-Teilchen für das herzustellende EPP-Formteil bereitgestellt. Bei diesen EPP-Teilchen handelt es sich gemäß der vorliegenden Erfindung im Wesentlichen um fertige Zwischenprodukte, beispielsweise um handelsübliche EPP-Granulate, bei denen die EPP-Teilchen insbesondere als Kügelchen oder Perlen vorliegen können. Beispiele für handelsübliche EPP-Granulate sind Neopolen^{®} P der Firma BASF SE und Eperan™-PP der Firma Kaneka.

Das Benetzen in Schritt b) wird vorzugsweise durch Besprühen, insbesondere dosiertes Besprühen, der EPP-Teilchen in einem geschlossenen oder in einem teilweise offenen Behälter ausgeführt. Die erfindungsgemäß verwendete wässrige Emulsion zumindest eines mit Chlor und Maleinsäureanhydrid modifizierten Polyolefins wird im Folgenden der einfacheren Lesbarkeit halber als "wässrige CMP-Emulsion" bezeichnet.

Alternativ können die EPP-Teilchen zum Benetzen in Schritt b) in einem geschlossenen Behälter gemischt werden, in dem die EPP-Teilchen in der wässrigen CMP-Emulsion bewegt werden. Eine weitere erfindungsgemäße Variante ist, dass die EPP-Teilchen und die wässrige CMP-Emulsion gemeinsam zwischen getrennten Behältern gepumpt werden. In einer anderen Abwandlung der Erfindung können die EPP-Teilchen in einen Behälter mit Siebboden gefüllt und mit der wässrigen CMP-Emulsion drucklos überflutet werden.

In jedem Fall ist es das Ziel des Benetzens in Schritt b), einerseits die EPP-Teilchen vollständig zu benetzen und andererseits die nicht benötigte wässrige CMP-Emulsion aufzufangen und wieder zu verwenden.

Nach dem Benetzen in Schritt b) und einem optionalen Trocknen in einem weiteren Schritt c) werden die EPP-Teilchen von einer sehr dünnen Feststoffschicht aus der wässrigen CMP-Emulsion umhüllt. Trotz dieser Feststoffschicht bleiben die EPP-Teilchen optisch unverändert, sind aber an ihrer Oberfläche funktionalisierbar.

Unter "funktionalisierbar" wird im Sinne der vorliegenden Erfindung verstanden, dass die dünne Feststoffschicht aus der wässrigen CMP-Emulsion auf den EPP-Teilchen sich unter Umgebungsbedingungen (Normaldruck von ca. 1 bar, Standardtemperatur von ca. 25 °C) inert verhält, d.h. die physikalischen Eigenschaften (z.B. die Rieselfähigkeit) der EPP-Teilchen nicht wesentlich verändert. Erst bei erhöhter Temperatur, wie sie nachstehend noch genauer angegeben ist, wird die dünne Feststoffschicht aus der wässrigen CMP-Emulsion in der nachstehend beschriebenen Weise funktionalisiert.

Die solchermaßen vorbehandelten funktionalisierbaren EPP-Teilchen können vor dem Formgeben in Schritt e) zeitlich nahezu unbegrenzt gelagert werden, vorzugsweise in getrocknetem Zustand.

Zum Formgeben in Schritt e) können die funktionalisierbaren EPP-Teilchen in eine einfache, passende Form eingebracht und ggf. verdichtet werden. Trotz der erfindungsgemäßen Funktionalisierbarkeit der EPP-Teilchen bleibt ihre Rieselfähigkeit erhalten, so dass das Befüllen einer Form problemlos möglich ist, insbesondere im getrockneten Zustand.

Da EPP einen Schmelzbereich von 160 °C bis 165 °C aufweist, wird in Schritt f) das Erhitzen der formgegebenen, funktionalisierbaren EPP-Teilchen bei einer Temperatur unterhalb dieses Schmelzbereichs durchgeführt, wodurch die formgegebenen, funktionalisierbaren EPP-Teilchen funktionalisiert werden.

Bei Erreichen der erforderlichen Temperatur werden die bis dahin unpolaren Oberflächen der EPP-Teilchen polarisiert, indem aus der funktionalisierenden Schicht (Feststoffschicht aus der wässrigen CMP-Emulsion) heraus Heteroatome auf ihnen deponiert werden. Konkret umhüllt die erfindungsgemäße wässrige CMP-Emulsion als solche die EPP-Teilchen und bildet (nach der Trocknung) einen extrem dünnen, mechanisch haftenden Film. Das in Wasser zu Maleinsäure hydrolysierende Maleinsäureanhydrid geht aufgrund seiner ungesättigten Verbindungen leicht Additionsreaktionen ein. Ferner reagiert das wegen seiner hohen Elektronegativität sehr reaktionsfreudige Chlor mit aliphatischen Kohlenwasserstoffen über den Mechanismus der radikalischen Substitution.

Beim Erhitzen in Schritt f) bilden sich an der nun funktionalisierten Oberfläche der EPP-Teilchen einzelne Chlor-Radikale, die Kohlenstoff-Wasserstoff-Bindungen aufbrechen können. Hierbei werden Wasserstoffatome durch Chlor substituiert, wodurch eine aktivierte Oberfläche geschaffen wird, an der neue chemische Bindungen erfolgen können. In der Folge führt das zu elektrochemischen Wechselwirkungen und Bindungen zwischen den Oberflächen der EPP-Teilchen und somit zu einer stabilen und dauerhaften Verbindung der einzelnen EPP-Teilchen zu einem gebrauchsfertigen EPP-Formteil.

Das Erhitzen in Schritt f) kann auf verschiedene Arten erfolgen. Ganz herkömmlich kann es in einem Ofen oder einer entsprechenden Heizvorrichtung geschehen. Aber auch ein Erhitzen zwischen zwei Heizplatten ist vorgesehen, ohne dass hierbei ein rundum komplett geschlossenes Werkzeug erforderlich ist. Zur Anwendung kann diese Variante dann kommen, wenn beispielsweise eine kontinuierliche Produktion von Profilen, Halbzeugen oder die Herstellung sehr langer Formteile erforderlich ist. Dies ist mit den heute bekannten Verfahren, wenn überhaupt, nur äußerst eingeschränkt machbar.

Das Abkühlen in Schritt g) kann ganz einfach nach dem Entformen des EPP-Formteils unter Umgebungstemperatur stattfinden. Es kann aber auch die Form als solche gekühlt werden, bevor das EPP-Formteil entnommen wird.

Das erfindungsgemäße Verfahren weist gegenüber dem Stand der Technik insbesondere den Vorteil auf, dass die EPP-Teilchen bei moderaten Verfahrensbedingungen, d.h. im Wesentlichen drucklos und bei Temperaturen unter dem Schmelzbereich von EPP, miteinander verklebt (aber nicht versintert oder verschweißt) werden. Demgegenüber werden in herkömmlicher Weise EPP-Teilchen mittels Wasserdampf bei hoher Temperatur und damit bei hohem Druck miteinander versintert bzw. verschweißt, was gegenüber der erfindungsgemäßen Lösung deutlich energieintensiver und apparativ aufwändiger ist, insbesondere aufwändiger in der Bereitstellung von Wasserdampf in Bezug auf die Anlagentechnik, eine ausreichende Energieversorgung, einen hohen Anteil an Verlustwärme und notwendige Kühlkreisläufe.

Da erfindungsgemäß kein Wasserdampf benötigt wird, muss die für die Formgebung in Schritt e) erforderliche Form nicht zwingend aus Metall gefertigt werden und muss auch keine für Wasserdampf durchlässigen Kavitäten aufweisen. Stattdessen können selbst einfache Formen oder Hilfsformen aus Holz, Harz oder Kunststoffen verwendet werden, solange diese für die in Schritt f) für das Erhitzen erforderliche Temperatur ausgelegt sind.

Bei der herkömmlichen Herstellung von EPP-Formteilen durch physikalisches Schäumen ist ein Verdichtungsgrad der EPP-Teilchen im Werkzeug von ca. 50 % erforderlich. Das bedeutet, dass die ursprüngliche Schüttung der losen EPP-Teilchen so verdichtet wird, dass eine Formteildichte entsteht, welche etwa doppelt so hoch wie die ursprüngliche Schüttdichte liegt. Eine deutlich geringere Verdichtung verhindert oder beeinträchtigt sonst den herkömmlichen Sinterprozess.

Demgegenüber weist das erfindungsgemäße Verfahren den weiteren Vorteil auf, dass die zu erreichenden Formteildichten in einem größeren Umfang variiert werden können. Auf diese Weise sind nicht nur unterschiedlich dichte Formteile herstellbar, sondern auch teilporöse Strukturen, da bereits kleine Kontaktflächen zwischen den einzelnen EPP-Teilchen zu einer Verbindung führen und die Bildung eines Formteiles ermöglichen.

Die in Schritt a) bereitgestellten EPP-Teilchen können in einer Weiterbildung der Erfindung eine Mischung aus zumindest zwei verschiedenen Typen von EPP sein, wodurch es möglich ist, poröse oder teilporöse Dichteverteilungen sowie Gradienten herzustellen.

Um eine möglichst gute Kompatibilität mit den EPP-Teilchen zu erreichen ist das mit Chlor und Maleinsäureanhydrid modifizierte Polyolefin in der wässrigen CMP-Emulsion vorzugsweise ein Polypropylen.

In einer Weiterbildung der Erfindung kann das Verfahren nach Schritt b) und vor Schritt e) den Schritt c) Trocknen der benetzten und funktionalisierbaren EPP-Teilchen umfassen. Durch das Trocknen werden insbesondere die physikalischen Eigenschaften der funktionalisierbaren EPP-Teilchen positiv beeinflusst. So kann die Trocknung dazu führen, dass die funktionalisierbaren EPP-Teilchen zeitnah verpackt (z.B. abgesackt) und konfektioniert werden können, um sie als Zwischenprodukt zu verschicken.

In einer Weiterbildung der Erfindung umfasst das Verfahren nach Schritt b), und ggf. nach Schritt c), und vor Schritt e) den Schritt d) Bereitstellen eines Kaschierungsmaterials und/oder eines Verstärkungsmaterials. Dabei wird in Schritt e) das Formgeben der funktionalisierbaren EPP-Teilchen in direktem Kontakt mit dem Kaschierungsmaterial und/oder dem Verstärkungsmaterial durchgeführt.

Das Bereitstellen in Schritt d) kann insbesondere dadurch erfolgen, dass eine Form für das herzustellende EPP-Formteil zumindest teilweise mit einem Kaschierungsmaterial ausgekleidet wird, bevor die Befüllung der Form mit den EPP-Teilchen erfolgt. Ebenso kann in der Form zunächst ein Verstärkungsmaterial vorgesehen werden, bevor das EPP-Teilchen um dieses Verstärkungsmaterial herum eingefüllt wird.

Das Bereitstellen in Schritt d) kann ferner auch abwechselnd erfolgen, indem beispielsweise zuerst ein Kaschierungsmaterial (z.B. eine Folie) eingelegt wird, dann eine erste Schüttung der funktionalisierbaren EPP-Teilchen erfolgt, auf welcher ein Verstärkungsmaterial (z.B in Form einer Verstärkungsrippe) platziert wird, bevor eine abschließende Schüttung mit funktionalisierbaren EPP-Teilchen erfolgt. Ebenso kann auf die abschließende Schüttung noch ein Kaschierungsmaterial aufgelegt werden, bevor in Schritt e) die Formgebung erfolgt.

Die Formulierung "in direktem Kontakt" bedeutet, dass die EPP-Teilchen ohne weitere Vorbehandlung des Kaschierungsmaterials und/oder des Verstärkungsmaterials an dieses, in dieses oder um dieses herum gefüllt werden, so dass die EPP-Teilchen in direkten Kontakt mit der Oberfläche des Kaschierungsmaterials und/oder des Verstärkungsmaterials kommen.

Es wurde überraschenderweise gefunden, dass mit dem erfindungsgemäßen Verfahren gemäß dieser Weiterbildung dauerfeste Verbindungen von EPP zu anderen Materialien hergestellt werden können, um so die erhaltenen EPP-Formteile mit einer Kaschierung und/oder einer Verstärkung zu versehen. Dies ist insbesondere möglich, ohne die anderen Materialien einer speziellen Vorbehandlung, beispielsweise mit Haftvermittlern o.ä. zu unterziehen.

Unter "Kaschierung" wird in diesem Zusammenhang das Verbinden mehrerer Lagen gleicher oder verschiedener Materialien verstanden, um insbesondere die erhaltenen EPP-Formteile zu schützen und/oder zu dekorieren und/oder eine Addition günstiger Materialeigenschaften zu erzielen. Der Begriff "Verstärkung" ist dem Fachmann geläufig. Verstärkungen dienen insbesondere dazu, die mechanischen Eigenschaften eines Formteils zu verbessern.

Üblicherweise werden Kaschierungen in einem vom Herstellungsprozess des Formteils getrennten zweiten Arbeitsgang realisiert, indem auf das fertige Formteil zunächst ein Kaschiermittel (z.B. Lack, Leim, Wachs) aufgetragen wird, bevor die eigentliche Kaschierung aufgebracht wird. Erfindungsgemäß kann nun in einem einzigen Arbeitsgang ein EPP-Formteil mit Kaschierung und/oder Verstärkung hergestellt werden. Ein großer Vorteil besteht in der breiten Auswahl möglicher Materialien für die Kaschierung und/oder Verstärkung, die im Wesentlichen ohne Vorbehandlung im erfindungsgemäßen Verfahren eingesetzt werden können.

Vorzugsweise ist das in Schritt d) bereitgestellte Kaschierungsmaterial und/oder Verstärkungsmaterial ausgewählt aus Folien, Textilien, Platten, festen Körpern und Kombinationen davon. Die Folien können dabei sowohl Polymerfolien wie auch Metallfolien sein. Die Textilien können natürliche Fasern, polymere Fasern, metallische Fasern und Kombinationen davon sein und als Gewebe, Gelege, Rovings, Gewirke, Geflechte, Gestricke und Kombinationen davon vorliegen. Unter Platten werden Körper verstanden, deren flächige Ausdehnung ein Vielfaches ihrer Dicke beträgt. Die Platten können ebenfalls aus natürlichen Materialien, polymeren Materialien, metallischen Materialien und Kombinationen davon bestehen. Mit festen Körpern sind Körper gemeint, deren drei Dimensionen im Wesentlichen in der gleichen Größenordnung liegen. Diese Körper können ebenfalls natürliche Materialien, polymere Materialien, metallische Materialien und Kombinationen davon umfassen.

Erfindungsgemäß ist es nun möglich, auch Kaschierungen aus Textilien auf EPP-Formteile aufzubringen, was nach dem Stand der Technik bislang daran scheiterte, dass zur Herstellung herkömmlicher EPP-Formteile Wasserdampf verwendet wird, der während des Herstellungsprozesses die Textilien quasi "gebügelt" hat, wodurch nicht nur die Optik oder die Haptik der textilen Kaschierung verloren ging, sondern häufig auch mechanische und/oder physikalische Eigenschaften beeinträchtigt wurden.

Ferner wurde überraschenderweise festgestellt, dass mit dem Verfahren der vorliegenden Erfindung sogar sichere und stabile Verbindungen von EPP mit Metallen wie Aluminium oder Stahl erhalten werden können. Dies öffnet neue Wege für die Herstellung von Kombinationen aus schaumartigen EPP-Formteilen und Metallen. Eine bevorzugte Ausführungsform sieht vor, dass der wässrigen CMP-Emulsion zumindest ein Epoxidharz zugesetzt ist. Bei dem Epoxidharz handelt es sich insbesondere um ein difunktionelles Bisphenol A / Epichlorhydrin-Derivat, das vorzugsweise unverdünnt und/oder flüssig und/oder farblos und/oder klar ist. Das Epoxidharz stabilisiert einerseits die Emulsion. Da es nicht - wie es beispielsweise bei Lacken, Gießharzen und dergleichen üblich ist - mit Aminen oder Isocyanaten vernetzt wird, wirkt das Epoxidharz andererseits als elastifizierende Komponente in der funktionalisierenden Schicht.

Nach einer alternativen Weiterbildung der Erfindung kann der wässrigen CMP-Emulsion zumindest ein epoxyterminiertes Silan, beispielsweise auf Basis eines Epoxycyclohexyl zugesetzt sein. Das Silan führt nach vorangegangener Hydrolyse in der wässrigen Emulsion und anschließender Kondensation durch Bildung von carboxylierten Polymeren zu einer verbesserten Haftung der funktionalisierenden Schicht auf den EPP-Teilchen, wobei ferner ein hochsiedender Esteralkohol als Koaleszenzmittel dienen kann.

Es hat sich für die Stabilität des herzustellenden EPP-Formteils als vorteilhaft erwiesen, wenn das Formgeben in Schritt e) unter mechanischem Druck erfolgt. Dieser Druck kann dabei je nach vorgesehener Anwendung des EPP-Formteils zwischen 1 bar und 5 bar, insbesondere zwischen 1 bar und 2 bar, liegen. Über den in Schritt e) aufgebrachten Druck kann insbesondere die Dichte des fertigen EPP-Formteils in weiten Bereichen eingestellt werden. Dadurch ist es auch möglich, Dichtegradienten einzustellen, da die einzelnen Partikel nicht vollständig miteinander verbunden sein müssen. Die dadurch gebildete poröse Struktur bietet zusätzliche Anwendungsgebiete.

Von dem aufzubringenden Druck hängt maßgeblich das spätere Ergebnis, das heißt, die Eigenschaften und Güte des hergestellten EPP-Formteils ab. Diese Druckabhängigkeit bedeutet aber nicht, dass ein gutes Ergebnis nur mit einem ausreichend hohen Druck darstellbar ist. Vielmehr spiegelt der Druck beim Befüllen der Form in Schritt e) die Variabilität des erfindungsgemäßen Verfahrens wider.

In einer alternativen Ausführungsform wird der mechanische Druck in Schritt e) nur zeitweise aufgebracht. Das bedeutet, dass nur zum Formgeben, bzw. Verdichten der Schüttung aus EPP-Teilchen ein Druck aufgebracht wird, beispielsweise mit einem Stempel, der anschließend wieder entspannt wird. Erfindungsgemäß wird ein Verdichtungsgrad zwischen 1,5 und 2 bevorzugt.

In einer bevorzugten Weiterbildung des erfindungsgemäßen Verfahrens erfolgt das Erhitzen in Schritt f) drucklos. "Drucklos" heißt in diesem Zusammenhang, dass während des Erhitzens von außen kein (zusätzlicher) Druck aufgebracht wird, wie es nach dem Stand der Technik üblich ist. Da nach der vorliegenden Erfindung vorzugsweise keine druckstabilen Formen verwendet werden, kann sich beim Erhitzen auch im Wesentlichen kein hoher Druck aufbauen. "Drucklos" bedeutet im Sinne der Erfindung ferner, dass der in Schritt e) zum Formgeben der funktionalisierbaren EPP-Teilchen aufgebrachte Druck zumindest zu Beginn des Erhitzens in Schritt f) noch aufrecht erhalten werden kann.

Beim klassischen Versintern nach dem Stand der Technik werden die EPP-Teilchen zuerst beim Befüllen der noch kalten Form verdichtet (Füllinjektor). Dieser Druck reicht aber noch nicht für den späteren Sinterprozess aus. Erst durch das Erhitzen mit Wasserdampf dehnt sich die in den EPP-Teilchen eingeschlossene Luft aus und lässt den Druck weiter ansteigen. Erst dann erfolgt die Versinterung. Demgegenüber steigt der Druck beim erfindungsgemäßen Verfahren nach dem Befüllen der Form und dem Formgeben in Schritt e) nicht weiter an, sondern nimmt in den nachfolgenden Verfahrensschritten ab.

In einer Weiterbildung der Erfindung kann nach dem Formgeben in Schritt e) der aufgebrachte Druck völlig entspannt und das erfindungsgemäße Verfahren ebenfalls durchgeführt werden. In diesem Fall wird aus einer relativ losen Schüttung der EPP-Teilchen ein EPP-Formteil mit einer sehr lockeren und offenen Struktur erhalten. Solche speziellen EPP-Formteile sind wünschenswert für die Anwendung als Entlüftung oder Drainage. Ferner können diese speziellen EPP-Formteile bei Sandwichstrukturen eingesetzt werden, bei denen es hauptsächlich um die Distanzierung der tragenden Flächen zueinander geht.

Da EPP einen Schmelzbereich von 160 °C bis 165 °C aufweist, hat es sich erfindungsgemäß als vorteilhaft herausgestellt, das Erhitzen in Schritt f) bei einer Temperatur von 110 °C bis 150 °C, insbesondere 115 °C bis 125 °C, durchzuführen. Hierdurch kann die Aufheizung "trocken" erfolgen, d.h. ohne eine möglicherweise störende flüssige Phase.

Das Ziel der vorliegenden Erfindung wird in einem zweiten Aspekt durch ein EPP-Formteil erreicht, das durch das erfindungsgemäße Verfahren erhältlich ist.

Ein solches EPP-Formteil weist den Vorteil auf, dass es einfacher und kostengünstiger herstellbar ist als vergleichbare Formteile aus dem Stand der Technik. Auch kleine Serien und sogar Einzelteile sind mit vertretbarem Aufwand realisierbar. Die erfindungsgemäßen EPP-Formteile können zudem eine poröse oder teilporöse Dichteverteilung aufweisen, um maßgeschneiderte Eigenschaften zu erhalten.

Eine Ausführungsform des EPP-Formteils weist zumindest teilweise eine Kaschierung auf. Hierdurch kann die Oberfläche des EPP-Formteils an funktionale und optische Bedürfnisse angepasst werden. Die Formulierung "zumindest teilweise" bedeutet im Sinne der vorliegenden Erfindung, dass das EPP-Formteil nicht vollständig eine Kaschierung aufweisen muss, sondern diese nur in gewissen Bereichen oder auf bestimmten Oberflächen angeordnet ist.

Eine andere Ausführungsform des EPP-Formteils weist zumindest bereichsweise eine Verstärkung auf. Durch eine Verstärkung können die mechanischen Eigenschaften des EPP-Formteils beeinflusst werden. Die Formulierung "zumindest bereichsweise" bedeutet im Sinne der vorliegenden Erfindung, dass das EPP-Formteil nicht durchgängig mit einer Verstärkung versehen sein muss, sondern die Verstärkung nur in Bereichen aufweisen kann, die beispielsweise mechanisch stärker belastet sind.

In einer Weiterbildung des zweiten Aspekts weist das EPP-Formteil eine Dichte von 15 kg/m³ bis 250 kg/m³, insbesondere von 25 kg/m³ bis 100 kg/m³ auf. Es ist damit herkömmlichen EPP-Formteilen vor allem in seiner großen Variabilität zumindest ebenbürtig. Zudem kann die Festigkeit des EPP-Formteils sowohl durch die Konzentration der verwendeten wässrigen CMP-Emulsion als auch durch den bei der Formgebung aufgebrachten Druck entsprechend der jeweiligen Einsatzanforderung angepasst werden.

Weitere Ziele, Merkmale, Vorteile und Anwendungsmöglichkeiten ergeben sich aus der nachfolgenden Beschreibung von die Erfindung nicht einschränkenden Ausführungsbeispielen. Dabei bilden alle beschriebenen Merkmale für sich oder in beliebiger Kombination den Gegenstand der Erfindung, auch unabhängig von ihrer Zusammenfassung in den Ansprüchen oder deren Rückbeziehung.

Allgemein ist die Erfolgsgrundlage einer Verklebung von zwei Teilen eine in der Klebefuge oder an der Klebefläche zu erreichende Temperatur, die als "Objekttemperatur" bezeichnet werden kann. Wie und vor allem wie schnell die Objekttemperatur erreicht wird, hängt vom Bauteil (Größe, Geometrie), der Wärmeleitung des verwendeten Materials, der eingesetzten Anlage und von der Leistung des Heizelementes ab. Als optimal wird ein relativ kurzer Zeitraum zum Erreichen der Objekttemperatur angesehen, was jedoch nicht immer realisierbar ist.

In einem konkreten Ausführungsbeispiel der vorliegenden Erfindung, in dem ein dünnes, gut wärmeleitendes Werkzeug verwendet wird, kann die Objekttemperatur in sehr kurzer Zeit an den oberen Schichten des späteren Formteils erreicht werden. Je dünner und filigraner das Formteil ist, desto schneller ist das komplette Material ausreagiert. Bei großen Wandstärken steht dem aber die gute Isolation von Partikelschäumen entgegen.

Kurze Zeiträume zum Erreichen der Objekttemperatur lassen sich erfindungsgemäß gut bei Kaschierungen (z.B. Folien oder Textilien auf EPP) erreichen, da die Partikelschaumschicht eher dünn ist und die Reaktion schnell erfolgen kann.

In einer speziellen Ausführungsform der Erfindung wird das Erhitzen in Schritt f) im Sinne einer ersten Aufheizung zunächst nur dazu genutzt, um die Kontur des EPP-Formteils zu bilden, ohne dass eine durchgehende Verbindung der EPP-Teilchen in das Innere des EPP-Formteils erfolgt. Diese durchgehende Verbindung der EPP-Teilchen kann anschließend im Rahmen einer Wärmelagerung (Temperung) erfolgen. Hierzu ist ggf. keine Form mehr notwendig, da das EPP-Formteils in sich grundsätzlich stabil ist. Die Form kann bereits für den nächsten Formgebungs-Vorgang verwendet werden, was die Taktzeit des Verfahren steigert.

Am derzeitigen Markt ist es gewünscht, dass EPP-Formteile aus einer generellen, oder auch nur partiellen, Mischung von EPP-Teilchen mit sehr unterschiedlicher Dichte hergestellt werden könnten. Auf diese Weise könnten Bereiche des EPP-Formteils, die rein für die Formgebung wichtig sind, für die Funktion aber eher eine untergeordnete Rolle spielen, mit leichten und dadurch günstigeren EPP-Teilchen hergestellt werden, während nur ausgewählte Bereiche des EPP-Formteils, die beispielsweise für die mechanische Festigkeit ausschlaggebend sind, mit höheren Dichten ausgestattet werden. Nach dem Stand der Technik ist dies nur eingeschränkt realisierbar, da EPP-Teilchen unterschiedlicher Dichte auch unterschiedliche Schmelzpunkte aufweisen. Differieren die verwendeten Dichten nun deutlich, so lässt sich der Sinterprozess nicht mehr exakt steuern, da ein gemeinsamer Schmelzbereich der Perlen nur schwer, oder gar nicht mehr, erreicht werden kann. Da das erfindungsgemäße Verfahren aber unabhängig vom Schmelzpunkt durchgeführt wird, sind Mischungen von EPP-Teilchen mit sehr unterschiedlicher Dichte problemlos verarbeitbar. Zudem können selbst Mischungen unterschiedlicher Kunststoffarten verarbeitet werden, was bei der herkömmlichen Verarbeitung mit Dampf ausscheidet.

Nachstehend werden Beispiele für Formteile nach der Erfindung gegeben.

Ladungsträger (Verpackungen, Lagerungen) aus EPP werden in großer Menge innerhalb der Zulieferketten beispielsweise bei Automobilherstellern eingesetzt. Um die Funktionalität des Ladungsträgers vor der Werkzeuganfertigung und Serienproduktion abschließend zu testen, wird stets ein Prototyp angefertigt, um die Passung der Bauteile und den Transportschutz während der Lieferkette zu bestätigen. Dies geschieht gewöhnlicherweise durch das Erstellen manuell gefräster Teile aus EPP-Blöcken. Die Nachteile dieser Vorgehensweise sind, dass der Aufbau einer gesamten Packeinheit (entspricht der kompletten Bestückung einer Transportpalette), meist an der Wirtschaftlichkeit scheitert, da das Fräsen mehrerer Teile sehr teuer ist.

Erfindungsgemäß ist dieser Fräsaufwand aus dem Stand der Technik für den ersten Prototypen eines EPP-Ladungsträgers mit dem Herstellen einer Hilfsform aus Holz oder Harz gleichzusetzen. Jedes weitere, nach dem beschriebenen Verfahren hergestellte Bauteil, verursacht dann aber nur noch einen Bruchteil der Kosten eines weiteren, gefrästen Bauteils.

Ein weiterer Aspekt ist, dass durch die Herstellung nach dem erfindungsgemäßen Verfahren auch die Oberflächenanmutung und Qualität einem späteren Serienteil nach konventioneller Art entspricht. Der Grund hierfür ist, dass durch das manuelle Fräsen aus EPP-Blöcken die einzelnen EPP Partikel aufgeschnitten werden und sich dadurch eine raue und mit Staub behaftete Oberfläche ergibt. Bauteile nach dem erfindungsgemäßen Verfahren weisen aber dieselbe hohe und schonende Oberflächenqualität bekannter EPP-Formteile auf. Dieselbe Argumentation gilt für alle sonstigen Entwicklungen von EPP-Formteilen wie beispielsweise Isolationen für sämtliche Bauteile von Heizkreisläufen oder Klimageräten, Transportbehältern für temperaturempfindliche Güter wie Medikamente und Lebensmittel, Spielzeuge oder Designprodukte.

Erfindungsgemäße Anwendungsbeispiele für EPP-Formteile mit Kaschierung und/oder Verstärkung sind Sandwichkonstruktionen, bei denen außerhalb und/oder innerhalb des EPP-Körpers Schichten aufgebracht sind. Weitere Anwendungsbeispiele sind EPP-Formteile mit eingebrachten Versteifungseinlegern. Gerade die Möglichkeit, Kombinationen aus verschiedenen Bauteilen herzustellen, z.B. ein Schaumteil mit einer Folienoberfläche, welches zusätzlich ein Versteifungsgerippe aus spritzgegossenen PP enthält, eröffnet neue Anwendungen, da alle Einzelbauteile aus PP in verschiedenen Ausführungen (Schaum, Folie, massiv) sein können. Trotz dieses Aufbaus ist eine sortenreine Rezyklierung problemlos möglich.

Weitere Beispiele für die beschriebene Kaschierung sind beispielsweise viele Interieur-Produkte in einem Kfz. So besteht z.B. schon seit Jahren der Wunsch, auch empfindliche Stoffe direkt mit EPP zu einem Formteil zu verbinden. Dies scheitert aber oft daran, dass die für die Kaschierung geplanten Materialien keine ausreichende Widerstandskraft gegen Wasserdampf besitzen. So zeigen sich z.B. nach konventionellem Verfahren hergestellte Teile hinterher oft, als ob sie mit "Dampf gebügelt und geglättet" wären. Die Notwendigkeit, dass Wasserdampf mit einem Druck von mehr als 2,5 bar für die Versinterung der EPP-Teilchen benötigt wird, führt gleichzeitig dazu, dass die Fasern der Textilien ihre ursprüngliche Struktur verlieren. Dieser Effekt tritt aber nur dann auf, wenn Druck, Wärme und vor allem Wasserdampf gleichzeitig wirken. Da beim erfindungsgemäßen Verfahren die Komponente Wasserdampf komplett fehlt, bleibt die Struktur und Anmutung der Textilien (oder anderer empfindlicher Materialien) erhalten.

Beispiele für kaschierte und/oder verstärkte EPP-Formteile gemäß der vorliegenden Erfindung sind im Kfz-Bereich Sonnenblenden, Säulenverkleidungen, Dachhimmel, Kofferraum- und Reserveradabdeckungen oder Hutablagen. Allgemeine Beispiele sind ferner: Halbzeuge zur Herstellung von Möbeln (z.B. Platten) und Möbel selbst, Spielzeug, Outdoor-Objekte, Maschinenverkleidungen und dergleichen.

## Patentansprüche

1. Verfahren zur Herstellung von EPP-Formteilen, umfassend die Schritte
a) Bereitstellen von EPP-Teilchen,
b) Benetzen der EPP-Teilchen mit einer wässrigen Emulsion zumindest eines mit Chlor und Maleinsäureanhydrid modifizierten Polyolefins und dadurch Erhalten von funktionalisierbaren EPP-Teilchen,
e) Formgeben der funktionalisierbaren EPP-Teilchen,
f) Erhitzen der formgegebenen, funktionalisierbaren EPP-Teilchen auf eine Temperatur unterhalb des Schmelzbereichs der EPP-Teilchen und dadurch Funktionalisieren der formgegebenen, funktionalisierbaren EPP-Teilchen, wobei die EPP-Teilchen miteinander verbunden werden, und
g) Abkühlen und dadurch Erhalten des EPP-Formteils.

2. Verfahren nach Anspruch 1, ferner umfassend nach Schritt b) und vor Schritt e) den Schritt c) Trocknen der benetzten und funktionalisierbaren EPP-Teilchen.

3. Verfahren nach Anspruch 1 oder 2, ferner umfassend nach Schritt b), und ggf. nach Schritt c), und vor Schritt e) den Schritt d) Bereitstellen eines Kaschierungsmaterials und/oder eines Verstärkungsmaterials, wobei in Schritt e) das Formgeben der funktionalisierbaren EPP-Teilchen in direktem Kontakt mit dem Kaschierungsmaterial und/oder dem Verstärkungsmaterial durchgeführt wird.

4. Verfahren nach Anspruch 3, wobei das in Schritt d) bereitgestellte Kaschierungsmaterial und/oder Verstärkungsmaterial ausgewählt ist aus Folien, Textilien, Platten, festen Körpern und Kombinationen davon.

5. Verfahren nach einem der Ansprüche 1 bis 4, wobei der wässrigen Emulsion zumindest eines mit Chlor und Maleinsäureanhydrid modifizierten Polyolefins zumindest ein Epoxidharz zugesetzt ist.

6. Verfahren nach einem der Ansprüche 1 bis 4, wobei der wässrigen Emulsion zumindest eines mit Chlor und Maleinsäureanhydrid modifizierten Polyolefins zumindest ein epoxyterminiertes Silan zugesetzt ist.

7. Verfahren nach einem der Ansprüche 1 bis 6, wobei das Formgeben in Schritt e) unter mechanischem Druck erfolgt.

8. Verfahren nach Anspruch 7, wobei der mechanische Druck in Schritt e) nur zeitweise aufgebracht wird, also nur zum Formgeben bzw. Verdichten der Schüttung aus EPP-Teilchen ein Druck aufgebracht und anschließend wieder entspannt wird.

9. Verfahren nach einem der Ansprüche 1 bis 8, wobei das Erhitzen in Schritt f) drucklos erfolgt, also während des Erhitzens von außen kein bzw. kein zusätzlicher Druck aufgebracht wird.

10. Verfahren nach einem der Ansprüche 1 bis 9, wobei das Erhitzen in Schritt f) bei einer Temperatur von 110 °C bis 150 °C, insbesondere 115 °C bis 125 °C, durchgeführt wird.

11. EPP-Formteil, erhältlich durch das Verfahren nach einem der Ansprüche 1 bis 10.

12. EPP-Formteil nach Anspruch 11, das zumindest teilweise eine Kaschierung aufweist.

13. EPP-Formteil nach Anspruch 11, das zumindest bereichsweise eine Verstärkung aufweist.

14. EPP-Formteil nach Anspruch 11, das eine Dichte von 15 kg/m³ bis 250 kg/m³ aufweist.

15. EPP-Formteil nach Anspruch 14, das eine Dichte von 25 kg/m³ bis 100 kg/m³ aufweist.

## Claims

1. Method for the manufacturing of EPP molded parts, comprising the following steps
a) Making available of EPP particles,
b) Wetting of EPP particles with an aqueous emulsion, at least with a polyolefin that is modified with chlorine and a maleic acid anhydride, and thus obtaining of functionalizable EPP particles,
e) Shaping of the functionalizable EPP particles,
f) Heating of the shaped, functionalizable EPP particles to a temperature below the melding point of the EPP particles, and in that way, functionalizing of the shaped, functionalizable EPP particles, where the EPP particles are connected to each other, and
g) Cooling down and thus obtaining of the EPP molded part.

2. Method as per claim 1, in addition comprising step c) Drying of the wetted and functionalizable EPP particles after step b) and before step e).

3. Method as per claim 1 or 2, in addition comprising step d) Making available of lamination material and/or reinforcing material after step b) and probably after step c) and before step e), **characterized in that** the shaping of the functionalizable EPP particles is carried out in step e) by direct contact with the lamination material and/or the reinforcing material.

4. Method as per claim 3, **characterized in that** the lamination material or the reinforcement material made available as per d) is selected from foils, textiles, plates, solids or a combination thereof.

5. Method as per one of claims 1 to 4, **characterized in that** an epoxy resin is added to the aqueous emulsion, at least with a polyolefin that is modified with chlorine and a maleic acid anhydride.

6. Method as per one of claims 1 to 4, **characterized in that** an epoxy-terminated silane is added to the aqueous emulsion, at least with a polyolefin that is modified with chlorine and a maleic acid anhydride.

7. Method as per one of claims 1 to 6, **characterized in that** the shaping in step 6 is made under mechanical pressure.

8. Method as per claim 7, **characterized in that** the mechanical pressure as per step e) is applied only intermittently, i.e. only for shaping and/or compacting of the bulk of EPP particles, and is subsequently released.

9. Method as per one of claims 1 to 8 **characterized in that** the heating in step f) is made without pressure, i.e. no pressure and/or no additional pressure is applied from outside during the heating.

10. Method as per one of claims 1 to 9, **characterized in that** the heating in step f) is made at a temperature between 110 °C and 150 °C, and in particular at a temperature between 115 °C and 125 °C.

11. EPP molded part obtained by the method as per one of claims 1 to 10.

12. EPP molded part as per claim 11 which at least in part has a lamination.

13. EPP molded part as per claim 11 which at least in some areas has a reinforcement.

14. EPP molded part as per claim 11 which has a density between 15 kg/m³ and 250 kg/m³

15. EPP molded part as per claim 14 which has a density between 25 kg/m³ and 100 kg/m³

## Revendications

1. Procédé de fabrication de pièces moulées en PPE, comprenant les étapes de :
a) Mise à disposition de particules de PPE,
b) Mouillage des particules de PPE avec une émulsion aqueuse d'au moins une polyoléfine modifiée avec du chlore et de l'anhydride maléique, aboutissant à l'obtention de particules de PPE fonctionnalisables,
e) Mise en forme des particules de PPE fonctionnalisables,
f) Échauffement des particules de PPE fonctionnalisables mises en forme à une température inférieure à la plage de fusion des particules de PPE, aboutissant à la fonctionnalisation des particules de PPE fonctionnalisables mises en forme, lesdites particules de PPE étant reliées entre elles, et
g) Refroidissement aboutissant à l'obtention de la pièce moulée en PPE.

2. Procédé selon la revendication 1, comprenant en outre l'étape c) Séchage des particules de PPE fonctionnalisables mouillées, après l'étape b) et avant l'étape e).

3. Procédé selon la revendication 1 ou 2, comprenant en outre l'étape d) Mise à disposition d'un matériau de contrecollage et/ou d'un matériau de renfort, après l'étape b), et éventuellement après l'étape c), et avant l'étape e), ladite étape e) consistant en l'exécution de la mise en forme des particules de PPE fonctionnalisables en contact direct avec le matériau de contrecollage et/ou le matériau de renfort.

4. Procédé selon la revendication 3, le matériau de contrecollage et/ou le matériau de renfort mis à disposition à l'étape d) étant choisi parmi des films, textiles, plaques, corps solides et combinaisons de ceux-ci.

5. Procédé selon l'une des revendications 1 à 4, au moins une résine époxy étant ajoutée à l'émulsion aqueuse d'au moins une polyoléfine modifiée avec du chlore et de l'anhydride maléique.

6. Procédé selon l'une des revendications 1 à 4, au moins un silane à terminaison époxy étant ajouté à l'émulsion aqueuse d'au moins une polyoléfine modifiée avec du chlore et de l'anhydride maléique.

7. Procédé selon l'une des revendications 1 à 6, la mise en forme de l'étape e) étant réalisée sous pression mécanique.

8. Procédé selon la revendication 7, la pression mécanique de l'étape e) n'étant appliquée que temporairement, c'est-à-dire qu'une pression est appliquée uniquement pour la mise en forme et compression des particules PPE en vrac, ladite pression étant détendue ensuite.

9. Procédé selon l'une des revendications 1 à 8, l'échauffement de l'étape f) étant réalisé sans pression, c'est-à-dire qu'aucune pression ni aucune pression supplémentaire n'est appliquée de l'extérieur pendant l'échauffement.

10. Procédé selon l'une des revendications 1 à 9, l'échauffement de l'étape f) étant effectué à une température de 110 °C à 150 °C, plus particulièrement de 115 °C à 125 °C.

11. Pièce moulée en PPE, s'obtenant par le procédé selon l'une des revendications 1 à 10.

12. Pièce moulée en PPE selon la revendication 11, présentant au moins partiellement un contrecollage.

13. Pièce moulée en PPE selon la revendication 11, présentant au moins par endroits un renfort.

14. Pièce moulée en PPE selon la revendication 11, présentant une densité comprise entre 15 kg/m³ et 250 kg/m³.

15. Pièce moulée en PPE selon la revendication 14, présentant une densité comprise entre 25 kg/m³ et 100 kg/m³.
